# EUROPEAN PATENT SPECIFICATION

(11) **EP 4 183 893 B1**
(45) Date of publication and mention of the grant of the patent: **02.07.2025**
(21) Application number: 21854079.7
(22) Date of filing: 04.08.2021
(51) Int. Cl.: C22C 38/22, C22C 38/26, C22C 38/32, C22C 45/02, C22C 1/00, C22C 1/04, B22F 1/00, B22F 9/08, B22F 10/25, B33Y 70/00, C22C 38/36, B22F 1/18, B22F 1/145, B22F 1/065, C22C 33/02

(54) **FE-BASED ALLOY POWDER**
LEGIERUNGSPULVER AUF EISENBASIS
POUDRE D'ALLIAGE À BASE DE FER

(30) Priority: 07.08.2020 KR 20200099078; 03.08.2021 KR 20210102000
(43) Date of publication of application: 24.05.2023
(73) Proprietor: Kolon Industries, Inc., Seoul 07793 (KR); Attometal Tech Pte. Ltd., Singapore 079903 (SG)
(72) Inventor: KIM, Choongnyun Paul, Seoul 07793 (KR)
(74) Representative: Ter Meer Steinmeister & Partner
(86) International application number: PCT/KR2021/010224
(87) International publication number: WO 2022/031000

(56) References cited:
- EP-A1- 0 745 698
- CN-A- 103 060 737
- GB-A- 1 039 809
- JP-A- 2001 303 218
- KR-A- 20000 039 464
- KR-A- 20120 139 821
- KR-A- 20150 105 284
- KR-A- 20200 021 090
- US-A1- 2020 109 465
- GUO WENMIN ET AL: "Fabrication and characterization of Fe-based amorphous coatings prepared by high-velocity arc spraying", MATERIALS AND DESIGN, vol. 78, 18 April 2015 (2015-04-18), pages 118 - 124, XP029184070, ISSN: 0261-3069, DOI: 10.1016/J.MATDES.2015.04.027

## Description

### Technical Field

The present disclosure relates to an iron-based alloy and alloy powder, and more particularly, to an alloy having excellent glass forming ability and having excellent wear and corrosion resistance to be used for various purposes and an alloy powder prepared from the alloy.

### Background Art

An amorphous alloy is an alloy in which metal atoms included in the alloy have a random and chaotic structure rather than a crystalline structure. Amorphous alloys have excellent chemical, electrical, and mechanical properties, and thus have been studied for various purposes, but there are not many cases in which amorphous alloys have been commercialized to date, due to difficulty in forming and manufacturing thereof, as well as high costs.

Two conditions should be satisfied to manufacture an amorphous alloy. An alloy composition having high glass forming ability is required, and a rapid cooling rate of a molten alloy is required. For example, a molten alloying material is required to be rapidly cooled and, even when rapid cooling is performed, an amorphous phase may not be formed at low glass forming ability of a composition of the alloy material.

In particular, when a product such as a coated body or a formed body is manufactured using alloy powder prepared from an amorphous alloy, a sufficient cooling rate is often not obtained in a process in which the alloy powder is molten and then cooled. For example, crystallization, rather than amorphization, mainly occurs, so that a ratio of the amorphous phase in the product may be rapidly reduced to cause difficulty in manufacturing an applied product utilizing characteristics of the amorphous alloy material.

Due to such issues, when a formed body is manufactured or a coating layer is formed using an amorphous alloy, a ratio of an amorphous phase may be reduced and desired physical properties of a product may not be obtained or density may not be excellent, so that corrosion resistance may be reduced and permeation of foreign materials may easily occur.

Accordingly, there is a need for research into an alloy, which may allow a ratio of an amorphous phase to be maintained to be high and may improve microstructural and mechanical properties, and a method of applying the alloy.

### (Prior Art Documents)

(Patent Document) Korean Patent Registration No. 10-0723167, GB1039809A, CN103060737A, EP0745698A1, US2020/109465A1 disclose iron-based powders for spray coating.

### Summary of Invention

### Technical Problem

An aspect of the present disclosure is to develop an alloy, which may obtain a high amorphous ratio when the alloy is used for various uses and purposes due to excellent glass forming ability thereof, and to provide alloy powder which may be prepared from the alloy and has mechanical and chemical properties, for example, oxidation resistance, wear resistance, and corrosion resistance.

In addition, an aspect of the present disclosure is to provide an alloy powder in which a ratio of an oxide included in an alloy coating layer is obtained to be low because oxidation is insufficiently performed during utilization of the alloy powder due to excellent oxidation stability.

### Solution to Problem

The invention provides an iron-based alloy powder according to claim 1 and its use according to claim 6. Preferred embodiments are defined in the dependent claims.

### Advantageous Effects of Invention

According to the invention an iron-based alloy includes iron, chromium, molybdenum, and niobium. In this case, each constituent element is included in a predetermined weight ratio to have excellent glass forming ability when a product is manufactured and to have excellent chemical properties such as oxidation resistance and corrosion resistance as well as excellent mechanical properties such as hardness and wear resistance have excellent effects.

According to the invention, iron-based alloy powder has a composition including iron, chromium, molybdenum, and niobium, and may be used for various methods such as additive manufacturing, powder metallurgy, powder injection, or thermal spray coating, and a product manufactured using the iron-based powder may have a composite structure, including both an amorphous phase and ceramic crystal, to have excellent oxidation resistance, wear resistance, and high-temperature characteristics.

In particular, according to an aspect of the present disclosure, iron-based alloy powder may have a significantly low mass increase rate due to oxidation at high temperature, and thus an issue caused by formation of an oxide may not substantially occur during utilization of the alloy powder and oxidation resistance, wear resistance, or the like, at high temperature may be improved.

### Brief Description of Drawings

FIG. 1 is a diagram illustrating results of observing cross-sections of powder particles of Example 3 and Comparative Example 1, and FIG. 2 is a graph illustrating results of analyzing particle sizes of the powder particles.
FIG. 3 is a diagram illustrating results of observing alloy powder particles of Example 3 and Comparative Example 1 through XRD analysis.
FIG. 4 is a diagram illustrating results of observing the alloy powder particles of Example 3 and Comparative Example 1 with an electron probe microanalyzer (EPMA).

### Best Mode for Invention

Prior to describing the present disclosure in detail below, it should be understood that the terms used herein are merely intended to describe specific embodiments and are not to be construed as limiting the scope of the present disclosure, which is defined by the appended claims. Unless otherwise defined, all terms including technical and scientific terms used herein have the same meaning as commonly understood by one of ordinary skill in the art to which the present disclosure belongs.

Hereinafter, examples of the present disclosure and technical effects thereof will be described with reference to accompanying drawings.

An iron-based alloy according to the invention contains iron (Fe), chromium (Cr), molybdenum (Mo), and niobium (Nb). The iron-based alloy according to the invention contains iron as a metal constituting an alloy, and thus may be significantly advantageous in terms of rigidity and economic feasibility of the alloy.

Chromium is included in the alloy to improve physical or chemical properties such as wear resistance and corrosion resistance of the iron-based alloy.

To secure glass forming ability and wear resistance, chromium is contained in an amount of 17.22 parts by weight or more, per 100 parts by weight of iron. The chromium may be contained in an amount of, in detail, 18.32 parts by weight or more and, in more detail, 21.96 parts by weight or more. On the other hand, when chromium is excessively contained, an intermetallic compound may be formed to increase brittleness and to reduce corrosion resistance. Accordingly, chromium is contained in an amount of 58.23 parts by weight or less, per 100 parts by weight of iron. Chromium may be contained in an amount of, in detail, 44.25 pars by weight or less and, in more detail, 34.11 parts by weight or less.

In an example not forming part of the invention, chromium may be contained in the iron-based alloy in an amount of 14.5 wt% or more and, in detail, 15 wt% or more, in more detail, 17 wt% or more. On the other hand, chromium may be contained in the iron-based alloy in an amount of 29 wt% or less and, in detail, 25 wt% or less, in more detail, 22 wt% or less.

Molybdenum is added to improve wear resistance, corrosion resistance, and friction resistance of the iron-based alloy.

To achieve such an effect, molybdenum is contained in an amount of 1.2 parts by weight or more, relatively to 100 parts by weight of iron. Molybdenum may be contained an in an amount of 2.44 parts by weight or more and, in detail, 4.52 parts by weight or more.

On the other hand, when molybdenum is excessively contained, the molybdenum may be diffused and precipitated without being dissolved in a matrix to deteriorate thermal properties of the material. Accordingly, molybdenum is contained in an amount of 26.10 parts by weight or less, per 100 parts by weight of iron. Molybdenum may be contained in an amount of 19.47 parts by weight or less and, in detail, 12.40 parts by weight or less.

In an example not forming part of the invention, molybdenum may be contained in the iron-based alloy in an amount of 1 wt% or less and, in detail, 2 wt% or more, in more detail, 3.5 wt% or more. On the other hand, molybdenum may be contained in the iron-based alloy in an amount of 13 wt% or less and, in detail, 11 wt% or less, in more detail, 8 wt% or less.

Niobium is an element dissolved in a matrix structure to significantly improve high-temperature stability of the matrix. Niobium does not react with oxygen in the atmosphere at high temperature, does not react with most chemicals, and does not corrode.

To achieve such an effect, niobium is contained in an amount of 0.12 parts by weight or more, per 100 parts by weight of iron. Niobium may be contained in an amount of, in detail, 0.61 parts by weight or more, in more detail, 1.29 parts by weight or more.

On the other hand, when niobium is excessively contained, niobium which is not dissolved in the matrix may segregate on an interface of the matrix or form an additional phase, and thus may reduce high-temperature stability and high-temperature oxidation resistance may be reduced. Accordingly, niobium is contained in an amount of 6.22 parts by weight or less, per 100 parts by weight of iron. Niobium may be contained in an amount of, in detail, 5.31 parts by weight, in more detail, 3.10 parts by weight or less.

In an example not forming part of the invention, niobium may be contained in the iron-based alloy in an amount of 0.1 wt% or more and, in detail, 0.5 wt% or more, in more detail, 1 wt% or more. On the other hand, niobium may be contained in the iron-based alloy in an amount of 3.1 wt% or less and, in detail, 3 wt% or less, in more detail, 2 wt% or less. In addition, the iron-based alloy according to an aspect of the present disclosure may further include at least one selected from the group consisting of boron (B), carbon (C), and silicon (Si).

Boron serves to provide mismatching and effective packing through a difference in particle size from metal atoms in the alloy to improve glass forming ability of the alloy. In addition, boron may form a boride to improve mechanical properties and wear resistance of the material.

To achieve such an effect, boron is contained in an amount of 0.12 parts by weight or more, per 100 parts by weight of iron. Boron may be contained in an amount of, in detail, 0.61 parts by weight or more, in more detail, 1.29 parts by weight or more.

On the other hand, when boron is excessively contained, a content of elements dissolved in a metal matrix may be reduced by an excessively formed boride to reduce chemical stability and to excessively increase brittleness of the material. Accordingly, boron is contained in an amount of 6.63 parts by weight or less, per 100 parts by weight of iron. Boron may be contained in an amount of, in detail, 5.31 parts by weight or less, in more detail, 3.88 parts by weight or less.

In an example not forming part of the invention, boron may be contained in the iron-based alloy in an amount of 0.1 wt% or more and, in detail, 0.5 wt% or more, in more detail, 1 wt% or more. On the other hand, boron may be contained in the iron-based alloy in an amount of 3.3 wt% or less and, in detail, 3 wt% or less, in more detail, 2.5 wt% or less.

Similarly to boron, carbon serves to provide mismatching and effective packing through a difference in particle size from metal atoms in the alloy to improve glass forming ability of the alloy. In addition, when the amount of added carbon is less than a predetermined amount, carbon may not be uniformly distributed in the matrix, resulting in a local mechanical property deviation of the material. Accordingly, carbon is contained in an amount of 0.12 parts by weight or more and, in detail, 0.13 parts by weight or more, per 100 parts by weight of iron.

On the other hand, when carbon is excessively contained, carbide may be excessively formed to prevent a solid solution strengthening effect of the matrix from being sufficiently exhibited, so that mechanical properties of the material may be deteriorated. Accordingly, carbon is contained in an amount of 3.61 parts by weight or less. Carbon may be contained in an amount of, in detail, 2.65 parts by weight or less, in more detail, 1.55 parts by weight or less.

In an example not forming part of the invention, carbon may be contained in the iron-based alloy in an amount of 0.1 wt% or more. On the other hand, carbon may be included in the iron-based alloy in an amount of 1.8 wt% or less and, in detail, 1.5 wt% or less, in more detail, 1.0 wt% or less.

The iron-based alloy according to the invention includes 17.22 to 58.23 parts by weight of chromium, 1.2 to 26.1 parts by weight of molybdenum, 0.12 to 6.22 parts by weight of niobium, 0.12 to 6.63 parts by weight of boron and 0.12 to 3.61 parts by weight of carbon, per 100 parts by weight of iron.

The iron-based alloy may contain, in detail, 18.32 to 44.25 parts by weight of chromium, 2.44 to 19.47 parts by weight of molybdenum, 0.61 to 5.31 parts by weight of niobium, 0.61 to 5.31 parts by weight of boron, and 0.12 to 2.65 parts by weight of carbon, per 100 parts by weight of iron.

In addition, the iron-based alloy may contain, in more detail, 21.96 to 34.11 parts by weight of chromium, 4.52 to 12.40 parts by weight of molybdenum, 1.29 to 3.10 parts by weight of niobium, 1.29 to 3.88 parts by weight of boron, and 0.13 to 1.55 parts by weight of carbon, per 100 parts by weight of iron.

In an example not forming part of the invention, the iron-based alloy according to an aspect of the present disclosure may further contain at least one selected from the group consisting of tungsten (W), cobalt (Co), yttrium (Y), manganese (Mn), aluminum (Al), zirconium (Zr), phosphorus (P), nickel (Ni), and scandium (Sc), other than the above-described alloy components. The at least one component may be contained in a lower content than the above-described iron, chromium, molybdenum, boron, and carbon. The iron-based alloy according to the invention contains a portion of impurities inevitably introduced during a manufacturing process.

Since silicon (Si) is a component disadvantageous in exhibiting glass forming ability and high-temperature oxidation resistance, silicon is not artificially added in the iron-based alloy according to an aspect of the present disclosure. Even when silicon is inevitably introduced, a content of the introduced silicon may be strongly suppressed. Silicon is contained in an amount of 0.2 parts by weight or less per 100 parts by weight of iron. Silicon may be contained in an amount of, in detail, 0.1 parts by weight or less, in more detail, 0.05 parts by weight or less. Silicon may be contained in an amount of, in even more detail, 0 parts by weight. On the other hand, silicon may be contained in an amount of 0.5 times or less, in detail, 0.3 times or less, in more detail, 0.1 times or less, relative to a content of carbon contained in the iron-based alloy.

In the iron-based alloy according to an aspect of the present disclosure, a ratio of the weight of chromium to the weight of molybdenum (Cr/Mo) may satisfy a range of 3 to 5. When the content ratio of chromium and molybdenum satisfies the corresponding range, excellent glass forming ability may be secured, and an advantageous effect of improving chemical and mechanical properties such as oxidation resistance, wear resistance, and hardness may be obtained. The ratio of the weight of chromium to the weight of molybdenum may be, in detail, 3.5 to 4.75, in more detail, 3.75 to 4.25. The iron-based alloy according to an aspect of the present disclosure includes elements according to the above-described composition, and thus may have excellent glass forming ability to form an amorphous phase.

Iron-based alloy powder according to the invention is prepared from the above-described iron-based alloy. The iron-based alloy powder according to the invention has the same composition as the above-described iron-based alloy. The iron-based alloy powder according to an aspect of the present disclosure may include an amorphous phase due to the excellent glass forming ability of a raw material.

The iron-based alloy powder according to one aspect of the present disclosure may be prepared by variously changing particle size and shape depending on use and application methods such as 3D printing, powder metallurgy, injection, molding, or thermal spray coating, and the particle size and shape may not be limited. For example, the iron-based alloy powder may have a particle size distribution of 1 to 150 µm and, in detail, of 10 to 100 µm. Alloy powder used for thermal spray coating may have an average particle size of 10 µm to 54 µm and, in detail, 16 to 43 µm. Alloy powder used for metal injection molding (MIM) may have an average particle size of 20 µm or less and, in detail, 5 to 16 µm.

As alloy powder used for 3D printing, a fine powder having an average particle size of 20 µm or less may be preferentially used in the case of 3D printing of a powder bed fusion method, and coarse powder having an average particle size of 150 to 430 µm and, in detail, 50 to 100 µm may be preferentially used in 3D printing of a direct energy deposit (DED) method. Even in the case of alloy powder used for laser cladding, alloy powder having a size similar to that in the DED method may be used.

When the particle size distribution and average size of the alloy powder are outside of the range, it may be difficult to obtain uniform quality when a product is manufactured using the alloy powder, and operation efficiency may be reduced.

A method of preparing iron-based alloy powder according to an aspect of the present disclosure is not limited, but the iron-based alloy powder may be prepared by a method such as water atomizing or gas atomizing, as a non-limiting example.

An atomizing method may refer to a method of preparing alloy powder by spraying gas or water when a molten metal for a molten alloy falls, to split into small particles, and then rapidly cooling alloy powder in a split droplet state. A person skilled in the art can easily understand and repeatedly implement the atomizing method without adding special technical means.

The iron-based alloy powder according to an aspect of the present disclosure may include an amorphous phase and alpha-iron (α-Fe) having a body-centered cubic (BCC) crystal structure.

The iron-based alloy powder according to an aspect of the present disclosure may include at least one of an iron-based boride and a chromium-based boride.

The iron-based boride and the chromium-based boride may be interpreted as including all of an iron boride, a chromium boride, and a boride of iron and chromium.

Chromium contained in the alloy powder may not be solid-solubilized in an iron matrix, and most of the chromium may be present in the form of a boride. The iron-based alloy powder may include 30 to 90 area% of iron boride and chromium-based boride. The iron-based alloy powder may include, in detail, 35 to 85 area% of iron boride and chromium-based boride, in more detail, 40 to 80 area% of iron boride and chromium-based boride.

A boride of molybdenum or niobium may not be contained in the alloy powder, or may be contained in an undetectable amount even when contained in the alloy powder. Most of the molybdenum or niobium contained in the iron-based alloy powder may be present as a solid solution dissolved in an iron-based matrix.

Since the iron-based alloy powder according to an aspect of the present disclosure is prepared by an iron-based alloy having excellent glass forming ability, an amorphous phase or a metallic glass phase may be observed in at least a partial region of a cross-section of the alloy powder. The presence of an amorphous phase or a metallic glass phase may be confirmed through EBSD or TEM.

Since the iron-based alloy powder according to an aspect of the present disclosure has the above-described composition and includes an amorphous phase in at least a partial region thereof, the iron-based alloy powder may have excellent oxidation resistance. For example, the iron-based alloy powder according to an aspect of the present disclosure may have a low oxidation rate at high temperature, a small total amount of oxidation, and a high critical temperature at which oxidation is rapidly performed.

### Mode for Invention

Hereinafter, the present disclosure will be described in more detail through examples. However, it should be noted that the following examples are only provided to describe the present disclosure, and the scope of the present disclosure is not limited to the following examples.

### <Example>

### Examples 1 to 7: Preparation of alloy powder

Materials were weighed to have a predetermined composition, and then molten to obtain an iron-based alloy. The obtained molten alloy was provided to an atomizer in a gas atmosphere to be atomized, and split molten metal droplets were cooled to prepare alloy powder particles of Examples 1 to 7. Alloy components and powder average diameters of Examples 1 to 7 are listed in Table 1.

### Examples 8 to 12: Formation of alloy coating layer using HVOF method

Oerlikon Metco Diamond Jet series HVOF gas fuel spray system was used, oxygen and propane gas were used as fuel, and high velocity oxygen fuel (HVOF) was used with a spray distance of 30 cm, and thus alloy coating layers having thicknesses listed in Table 2 were formed. The device and specific conditions used herein will be described below.

### - DJ Gun HVOF -

[Condition] Gun type: Hybrid, Air cap: 2701, LPG flow: 160 SCFH, LPG pressure: 90 PSI, Oxygen flow: 550 SCFH, Oxygen pressure: 150 PSI, Air flow: 900 SCFH, Air pressure: 100 PSI, Nitrogen flow: 28 SCFH, Nitrogen pressure: 150 PSI, Gun speed: 100 m/min, Gun pitch: 3.0 mm, Feeder rate 45 g/min, and Stand-off distance: 250 mm

### <Comparative Example>

### Comparative Examples 1 to 5: Preparation of alloy powder

A molten iron-based alloy was obtained through weight with a predetermined composition, and was then provided to an atomizer in a nitrogen gas atmosphere to prepare alloy powder particles of Comparative Examples 1 to 5. Alloy components and powder average diameters of Comparative Examples 1 to 5 are listed in Table 1.

### Comparative Examples 6 to 10: Formation of alloy coating layer

The alloy powder particles of Comparative Examples 1 to 5 were coated in the same manner as in Examples 8 to 12 to obtain alloy coating layers of Comparative Examples 6 to 10 listed in Table 2.

**[Table 1]**

| Classificat ion | Alloy Composition | | | | | | | Powder Average Diameter (µm) | Cr/Mo |
|---|---|---|---|---|---|---|---|---|---|
| | Fe (g) | Cr (g) | Mb (g) | Nb (g) | B (g) | C (g) | Si (g) | | |
| Example 1 | 100 | 27.55 | 6.89 | 4.82 | 2.75 | 0.55 | 0 | 33.1 | 4.00 |
| Example 2 | 100 | 28.23 | 7.06 | 2.47 | 2.82 | 0.56 | 0 | 33.1 | 4.00 |
| Example 3 | 100 | 17.22 | 26.10 | 0.12 | 6.63 | 0.12 | 0 | 31.9 | 0.66 |
| Example 4 | 100 | 58.23 | 1.2 | 6.22 | 0.12 | 3.61 | 0 | 34.0 | 48.53 |
| Example 5 | 100 | 21.96 | 4.52 | 1.29 | 3.88 | 0 | 0 | 33.8 | 4.86 |
| Example 6 | 100 | 18.32 | 19.47 | 0.61 | 0 | 2.65 | 0 | 35.0 | 0.94 |
| Example 7 | 100 | 44.25 | 2.44 | 5.31 | 0 | 0 | 0 | 32.8 | 18.14 |
| Comparative Example 1 | 100 | 86.10 | 0 | 0 | 12.24 | 0.25 | 1.40 | 31.2 | - |
| Comparative Example 2 | 100 | 16.49 | 27.74 | 6.78 | 0 | 3.96 | 0 | 32.6 | 0.59 |
| Comparative Example 3 | 100 | 60.52 | 1.0 | 0.1 | 7.71 | 0.1 | 0 | 32.4 | 60.52 |
| Comparative Example 4 | 100 | 27.55 | 6.89 | 0.08 | 2.75 | 0.55 | 0 | 33.1 | 4.00 |
| Comparative Example 1 | 100 | 28.23 | 7.06 | 7.02 | 2.82 | 0.56 | 0 | 33.1 | 4.00 |

**[Table 2]**

| Classification | Coating Method | Thickness of Coating layer (µm) | Alloy Powder Used |
|---|---|---|---|
| Example 8 | HVOF | 215.0 | Example 1 |
| Example 9 | HVOF | 425.1 | Example 2 |
| Example 10 | HVOF | 228.2 | Example 5 |
| Example 11 | HVOF | 388.3 | Example 6 |
| Example 12 | HVOF | 320.1 | Example 7 |
| Comparative Example 6 | HVOF | 223.3 | Comparative Example 1 |
| Comparative Example 7 | HVOF | 278.0 | Comparative Example 2 |
| Comparative Example 8 | HVOF | 401.7 | Comparative Example 3 |
| Comparative Example 9 | HVOF | 232.5 | Comparative Example 4 |
| Comparative Example 10 | HVOF | 257.4 | Comparative Example 5 |

### <Experimental Example>

### Experimental Example 1: Analysis of particle size of alloy powder

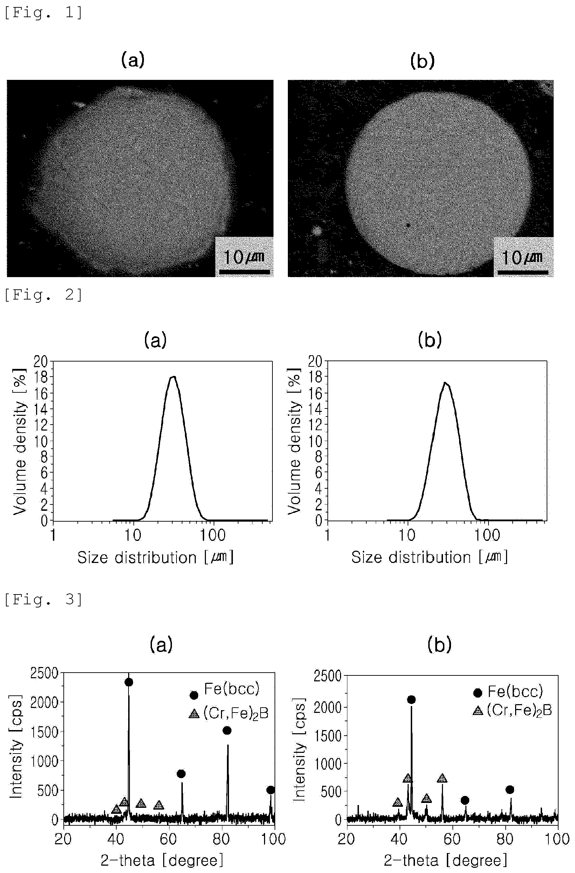

Particle sizes of the alloy powder particles of Example 3 and Comparative Example 1 were analyzed, and cross-sections of the powder particles were observed with an electron microscope (SEM). FIG. 1 is a diagram illustrating results of observing the cross-sections of the powder particles of Example 3 and Comparative Example 1, and FIG. 2 is a graph illustrating results of analyzing the particle sizes of the powder particles.

In (a) of FIG. 1 and (a) of FIG. 2, it can be seen that the alloy powder of Example 3 is a spherical powder particle having a particle size distribution of 11.2 to 81.1. In (b) of FIG. 1 and (b) of FIG. 2, it can be seen that the alloy powder of Comparative Example 1 is a spherical powder particle having a particle size distribution of 11.2 to 81.2.

### Experimental Example 2: XRD crystal analysis of alloy powder

The alloy powder particles of Example 3 and Comparative Example 1 were observed by XRD analysis, and results thereof are illustrated in FIG. 3.

In Example 3 and Comparative Example 1, Fe, Cr, and Fe-based boride having a body-centered cubic (bcc) structure were commonly detected.

### Experimental Example 3: Observation of microstructure of alloy powder

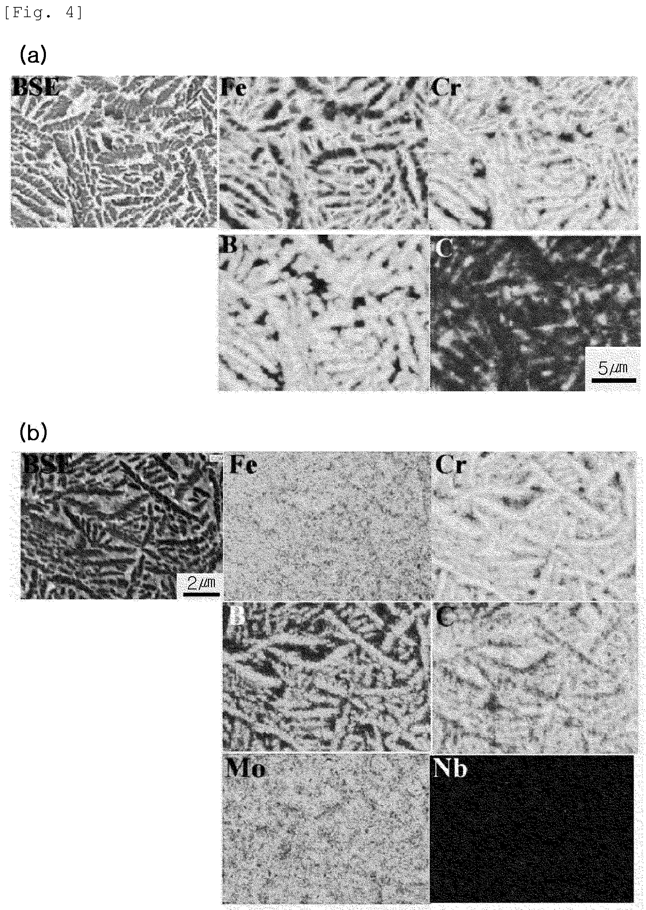

The alloy powder particles of Example 3 and Comparative Example 1 were observed with an electron probe microanalyzer (EPMA) analyzer to obtain the same results as illustrated in FIG. 4.

It can be seen that, in both Example 3 and Comparative Example 1, alpha-iron (α-Fe(BCC)), a Cr matrix, and Cr-based boride phases are all present in spherical powder particles.

### Experimental Example 4: Estimation of oxidation characteristics of alloy powder

After 50 g of the alloy powder particles of Examples 1 to 7 and Comparative Examples 1 to 5 were put into an Al₂O₃ pot, weight variation when a temperature was increased was observed using TG-DTA 8122 manufactured by Rigaku Corporation. A heating rate was set to be 10°C/min, a stop temperature was set to be 120°C, and variations of mass of the powder particles were observed while heating the powder particles from room temperature to 1200°C. A weight of each powder at the room temperature and a weight of each powder at 1200°C were measured and listed in Table 3, and a weight gained at 1200°C, relative to a weight at the room temperature, was converted into a weight gain (%) and is also listed in Table 3. In addition, a temperature at a point at which oxidation is rapidly increased to rapidly increase a weight of powder (a weight gain conversion temperature, °C) was measured and is also listed in Table 3.

**[Table 3]**

| Classification | Weight at Room Temperature (mg) | Weight at 1200°C (mg) | Weight Gain (%) | Weight Gain Conversion Temperature (°C) |
|---|---|---|---|---|
| Example 1 | 50130 | 50135 | 0.010 | 1009 |
| Example 2 | 50210 | 50211 | 0.002 | 1075 |
| Example 3 | 50118 | 50466 | 0.694 | 1025 |
| Example 4 | 50214 | 50666 | 0.900 | 1013 |
| Example 5 | 50105 | 50120 | 0.030 | 1053 |
| Example 6 | 50266 | 50691 | 0.846 | 1025 |
| Example 7 | 50420 | 51007 | 1.164 | 1080 |
| Comparative Example 1 | 50110 | 50896 | 1.569 | 970 |
| Comparative Example 2 | 50124 | 50983 | 1.714 | 992 |
| Comparative Example 3 | 50235 | 51045 | 1.612 | 981 |
| Comparative Example 4 | 50148 | 51362 | 2.421 | 982 |
| Comparative Example 5 | 50325 | 52678 | 4.676 | 964 |

### Experimental Example 5: Estimation of wear resistance of alloy coating layer

Wear resistance characteristics of the alloy coating layers of Examples 8 to 12 and Comparative Examples 6 to 10 were estimated. The degree of wear was measured using a pin on disc wear test machine (RB-102PD) by rubbing the coating layers with Si₃N₄ at a load of 5 kgf and a rate of 0.05 m/s at room temperature, and results thereof are listed in Table 4.

**[Table 4]**

| Classification | Amount of Wear (mm³) | Ratio of Amorphous Phase (%) |
|---|---|---|
| Example 8 | 0.150 | 10.3 |
| Example 9 | 0.016 | 13.5 |
| Example 10 | 0.210 | 9.7 |
| Example 11 | 0.170 | 8.40 |
| Example 12 | 0.220 | 7.90 |
| Comparative Example 6 | 3.255 | 0 |
| Comparative Example 7 | 4.240 | 0 |
| Comparative Example 8 | 2.980 | 0 |
| Comparative Example 9 | 0.210 | 9.7 |
| Comparative Example 10 | 0.097 | 8.4 |

### Experimental Example 6: Measurement of amorphous ratio of alloy coating layer

Crystals of the alloy coating layers of Examples 8 to 12 and Comparative Examples 6 to 10 were analyzed by an electron backscatter diffraction (EBSD) method using a back scattering electron diffraction pattern analyzer (nordlys CMOS detector, step size: 0.05 µm).

As a result of the EBSD analysis, (Cr,Fe)2B and Fe(BCC) phases were commonly observed and a specific amorphous phase ratio of each specimen is listed in Table 4.

As can be seen from Tables 3 and 4, in the examples satisfying the alloy composition of the present disclosure, a weight gain at 1200°C is 1.5% or less and a weight gain conversion temperature is 1000°C or more, whereas in the comparative examples which do not satisfy the alloy composition of the present disclosure, a weight gain at 1200°C is more than 1.5% and a weight gain conversion temperature is less than 1000°C. As also can be seen from Tables 3 and 4, in the examples satisfying the alloy composition of the present disclosure, a ratio of the amorphous phase in the coating layer is greater than 7 area% and an amount of wear of the coating layer is 1.0 mm³ or less, whereas in the comparative examples which do not satisfy the alloy composition of the present disclosure, a ratio of the amorphous phase in the coating layer is less than 7 area% and an amount of wear of the coating layer is greater than 1.0 mm³. That is, it can be seen that the examples satisfying the alloy composition of the present disclosure have not only excellent high-temperature oxidation resistance but also excellent glass forming ability, whereas the comparative examples which do not satisfy the alloy composition of the present disclosure have relatively poor high-temperature oxidation resistance or relatively poor glass forming ability.

## Claims

1. An iron-based alloy consisting of: per 100 parts by weight of iron (Fe),
17.22 to 58.23 parts by weight of chromium (Cr);
1.20 to 26.10 parts by weight of molybdenum (Mo);
0.12 to 6.22 parts by weight of niobium (Nb);
0.12 to 6.63 parts by weight of boron (B);
0.12 to 3.61 parts by weight of carbon (C); and
inevitably introduced impurities, a content of silicon in the impurities being limited to 0.2 parts by weight or less, including 0, per 100 parts by weight of the iron,
wherein the iron-based alloy is in powder form, and
wherein a weight gain rate of the iron-based alloy powder is 1.5% or less, as measured by heating the alloy powder within a temperature range of room temperature to 1200°C at a heating rate of 10°C/min while using TG-DTA 6122 manufactured by Rigaku Corporation.

2. The iron-based alloy of claim 1 comprising
an amorphous phase.

3. The iron-based alloy of claim 1, comprising an iron-based boride or a chromium-based boride.

4. The iron-based alloy of claim 1, comprising a solid solution formed by dissolving the molybdenum or the niobium with the iron.

5. The iron-based alloy of claim 1, wherein an average particle diameter of the iron-based alloy powder is 10 µm to 54 µm, as measured by observing cross-sections of the powder particles with a scanning electron microscope.

6. Use of the iron-based alloy of claim 1 for high-velocity oxygen fuel (HVOF) spray coating or plasma spray coating.

## Patentansprüche

1. Legierung auf Eisenbasis, bestehend aus:
pro 100 Gewichtsteile Eisen (Fe),
17,22 bis 58,23 Gewichtsteilen Chrom (Cr);
1,20 bis 26,10 Gewichtsteilen Molybdän (Mo);
0,12 bis 6,22 Gewichtsteilen Niob (Nb);
0,12 bis 6,63 Gewichtsteilen Bor (B);
0,12 bis 3,61 Gewichtsteilen Kohlenstoff (C); und
unvermeidlich eingeführten Verunreinigungen, wobei der Gehalt an Silizium in den Verunreinigungen auf 0,2 Gewichtsteile oder weniger, einschließlich 0, pro 100 Gewichtsteile des Eisens begrenzt ist,
wobei die Legierung auf Eisenbasis in Pulverform vorliegt, und
wobei die Gewichtszunahmerate des Legierungspulvers auf Eisenbasis 1,5% oder weniger beträgt, gemessen durch Erhitzen des Legierungspulvers in einem Temperaturbereich von Raumtemperatur bis 1200°C bei einer Erhitzungsgeschwindigkeit von 10°C/min unter Verwendung von TG-DTA 6122, hergestellt von Rigaku Corporation.

2. Legierung auf Eisenbasis nach Anspruch 1, umfassend eine amorphe Phase.

3. Legierung auf Eisenbasis nach Anspruch 1, umfassend ein Borid auf Eisenbasis oder ein Borid auf Chrombasis.

4. Legierung auf Eisenbasis nach Anspruch 1, umfassend eine feste Lösung, die durch Auflösen des Molybdäns oder des Niobs mit dem Eisen gebildet wird.

5. Legierung auf Eisenbasis nach Anspruch 1, wobei der durchschnittliche Teilchendurchmesser des Legierungspulvers auf Eisenbasis 10 µm bis 54 µm beträgt, gemessen durch Beobachtung von Querschnitten der Pulverteilchen mit einem Rasterelektronenmikroskop.

6. Verwendung der Legierung auf Eisenbasis nach Anspruch 1 zum Hochgeschwindigkeits-Sauerstoff-Brennstoff (HVOF)-Sprühbeschichten oder Plasmaspritzbeschichten.

## Revendications

1. Alliage à base de fer constitué de :
pour 100 parties en poids de fer (Fe),
17,22 à 58,23 parties en poids de chrome (Cr) ;
1,20 à 26,10 parties en poids de molybdène (Mo) ;
0,12 à 6,22 parties en poids de niobium (Nb) ;
0,12 à 6,63 parties en poids de bore (B) ;
0,12 à 3,61 parties en poids de carbone (C) ; et
des impuretés inévitablement introduites, une teneur en silicium dans les impuretés étant limitée à 0,2 partie en poids ou moins, 0 inclus, pour 100 parties en poids du fer,
dans lequel l'alliage à base de fer se présente sous forme de poudre, et
dans lequel un taux de gain de poids de la poudre d'alliage à base de fer est de 1,5 % ou moins, lorsque mesuré en chauffant la poudre d'alliage dans une plage de températures allant de la température ambiante jusqu'à 1 200 °C à une vitesse de montée en température de 10 °C/min en utilisant l'analyseur TG-DTA 6122 fabriqué par Rigaku Corporation.

2. Alliage à base de fer selon la revendication 1 comportant une phase amorphe.

3. Alliage à base de fer selon la revendication 1, comportant un borure à base de fer ou un borure à base de chrome.

4. Alliage à base de fer selon la revendication 1, comportant une solution solide formée en dissolvant le molybdène ou le niobium avec le fer.

5. Alliage à base de fer selon la revendication 1, dans lequel un diamètre de particule moyen de la poudre d'alliage à base de fer est de 10 µm à 54 µm, lorsque mesuré en observant des sections transversales des particules de poudre avec un microscope électronique à balayage.

6. Utilisation de l'alliage à base de fer selon la revendication 1 pour un revêtement par pulvérisation oxycombustible à grande vitesse (HVOF) ou un revêtement par pulvérisation par plasma.
